(19) Europäisches Patentamt

European Patent Office

Office européen des brevets

(11) **EP 3 499 436 A1**

(12) **DEMANDE DE BREVET EUROPEEN**

(43) Date de publication:
**19.06.2019 Bulletin 2019/25**

(51) Int Cl.:
*G06Q 10/04* [(2012.01)]    *G06Q 50/06* [(2012.01)]

(21) Numéro de dépôt: **18208904.5**

(22) Date de dépôt: **28.11.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **18.12.2017   FR 1762342**

(71) Demandeur: **Electricité de France
75008 Paris (FR)**

(72) Inventeurs:
• **LOTZ, Marie-Anne**
  **92190 Meudon (FR)**
• **LAMARCHE, Sophie**
  **75005 Paris (FR)**
• **RENAULT, Isabelle**
  **92120 Montrouge (FR)**

(74) Mandataire: **Cabinet Plasseraud
66, rue de la Chaussée d'Antin
75440 Paris Cedex 09 (FR)**

(54) **SYSTÈME DE PRÉVISION DE CONSOMMATION D'ÉNERGIE SUR UNE PÉRIODE PRÉDÉTERMINÉE**

(57)    Ce système met en oeuvre :
- des relevés (DRi) à distance de la consommation,
- un serveur météorologique (SMj),
- des moyens informatiques comprenant :
i) un calendrier (30),
ii) une mémoire (10), et
iii) au moins une interface homme/machine (20),
iv) un processeur pour mettre en oeuvre chacune des étapes suivantes :

- prévision pour chaque jour à venir de la période prédéterminée et pour chacune des plages horaires, d'une consommation énergétique à l'aide d'au moins un modèle mathématique en fonction d'une différence de temps entre la date à laquelle la prévision est réalisée et le jour concerné par la prévision,
- sommation pour chaque plage horaire et chaque consommateur des consommations déjà réalisées et mesurées de la période prédéterminée considérée et des prévisions correspondantes faites à l'étape précédente, et
- transmission à l'interface homme/machine (20) pour chaque plage horaire d'un résultat pour la période prédéterminée considérée.

FIG. 1

EP 3 499 436 A1

**Description**

La présente invention concerne un système de prévision de consommation d'énergie sur une période prédéterminée, par exemple pour un mois calendaire.

L'invention concerne ainsi la gestion d'un réseau de distribution d'énergie électrique par estimation de la demande en énergie des consommateurs. En connaissant par avance la consommation énergétique, il est ainsi possible de prévoir les pics de production et d'adapter les moyens de production en conséquence.

Il existe déjà des techniques de prévision de consommation, par exemple basées sur un modèle et selon lesquelles un apprentissage du modèle est effectué sur des historiques de données assez longs. Le plus souvent, lorsque l'apprentissage est terminé, les paramètres issus de cet apprentissage sont figés dans le système informatique de prévision de consommation.

Il est connu aussi, en fonction des résultats prévisionnels, d'imposer à des consommateurs ciblés, en général les « gros » consommateurs d'énergie, une consommation maximale en cas de pic de demande. Cette contrainte est bien entendu volontaire en contrepartie d'un tarif adapté. Cette technique est connue sous le nom d'effacement.

Cette technique d'effacement permet en effet de limiter la consommation énergétique lors des périodes de forte consommation et atténue de la sorte les pics de consommation (ou production). Toutefois, comme mentionné précédemment, seuls les consommateurs les plus importants qui acceptent de subir un effacement sont concernés par cette technique.

La présente invention a alors pour but, d'une part, d'améliorer la prévision de consommation et, d'autre part, d'être accessible à un plus grand nombre de consommateurs.

Une idée originale à l'origine de la présente invention est de faire participer le consommateur volontairement à la limitation de la consommation énergétique dans le réseau de distribution pendant les périodes de forte tension. En faisant participer un grand nombre de consommateurs, même « petits », il doit être possible de limiter la consommation énergétique lors des pics estimés de consommation.

À cet effet, la présente invention propose un système de prévision de consommation énergétique au sein d'un réseau de distribution d'énergie sur une période prédéterminée, comportant des moyens informatiques conçus pour être couplés avec :

- au moins un dispositif de relevé à distance de la consommation énergétique d'au moins un consommateur du réseau de distribution d'énergie, la localisation de chaque consommateur étant connue,
- un serveur météorologique pour fournir des températures prévisionnelles sur la période prédéterminée en fonction de la localisation d'un consommateur du réseau de distribution d'énergie,
  les moyens informatiques comprenant :
- un calendrier avec indication des jours et des jours fériés et une détermination de plages horaires pour chaque journée,
- une mémoire pour enregistrer des données associées aux consommateurs du réseau de distribution d'énergie, et
- au moins une interface homme/machine d'un consommateur.

Selon la présente invention, les moyens informatiques comportent en outre un processeur pour mettre en oeuvre chacune des étapes suivantes :

- prévision pour un consommateur à partir du calendrier et des données précitées correspondant audit consommateur, pour chaque jour à venir de la période prédéterminée et pour chacune des plages horaires, d'une consommation énergétique à l'aide d'au moins un modèle mathématique, choisi parmi les modèles mathématiques de régression paramétrique et les modèles mathématiques de régression semi-paramétrique, le modèle mathématique utilisé pour chaque jour étant choisi en fonction d'une différence de temps entre la date à laquelle la prévision est réalisée et le jour concerné par la prévision,
- sommation pour chaque plage horaire et chaque consommateur des consommations déjà réalisées et mesurées de la période prédéterminée considérée et des prévisions correspondantes faites à l'étape précédente, et
- transmission à l'interface homme/machine dudit consommateur pour chaque plage horaire d'un résultat correspondant à la sommation réalisée à l'étape précédente pour la période prédéterminée considérée.

Ce système permet de prédire une consommation sur une période pour un grand nombre de consommateurs. Elle s'ajuste au fur et à mesure que l'on avance dans la période de temps considéré et devient ainsi de plus en plus exacte. En s'adressant alors à un grand nombre de consommateurs, il est possible d'influer sur les consommations, notamment lorsqu'une pointe de consommation est prévue.

Selon une forme de réalisation préférée, il est prévu que chaque modèle utilisé pour la prévision de consommation est un modèle de régression semi paramétrique avec des fonctions de lissage correspondant aux fonctions spline. Ce type de modèle est bien adapté au type de prévision faite ici.

Dans un tel système de prévision, la période prédéterminée sur laquelle la prévision est faite peut être par exemple un mois calendaire.

Pour une prédiction mensuelle, il est proposé que le système de prévision défini ci-dessus utilise par exemple dix modèles distincts :

- un premier pour effectuer la prévision du lendemain de la date à laquelle la prévision est réalisée,
- un deuxième pour effectuer la prévision du deuxième jour après la date à laquelle la prévision est réalisée,
- un troisième pour effectuer la prévision du troisième jour après la date à laquelle la prévision est réalisée,
- un quatrième pour effectuer la prévision du quatrième jour après la date à laquelle la prévision est réalisée,
- un cinquième pour effectuer la prévision du cinquième jour après la date à laquelle la prévision est réalisée,
- un sixième pour effectuer la prévision du sixième jour après la date à laquelle la prévision est réalisée,
- un septième pour effectuer la prévision du septième jour après la date à laquelle la prévision est réalisée,
- un huitième pour effectuer les prévisions du huitième au quatorzième jour après la date à laquelle la prévision est réalisée,
- un neuvième pour effectuer les prévisions du quinzième au vingt-et-unième jour après la date à laquelle la prévision est réalisée, et
- un dixième pour effectuer les prévisions du vingt-deuxième jour après la date à laquelle la prévision est réalisée au dernier jour de la période prédéterminée considérée.

Dans cette forme de réalisation du système, le premier modèle pour effectuer la prévision du premier jour est une entrée explicative du procédé de prédiction utilisé, et les autres modèles sont avantageusement adaptés automatiquement de ce premier modèle.

Pour une plus grande efficacité, et notamment pour limiter les pics de consommation, il est avantageusement prévu dans le système de prévision décrit ici que la transmission à l'interface homme/machine des résultats est accompagnée de la transmission éventuelle d'une recommandation de consommation pour le(s) jour(s) à venir.

La présente invention concerne également un procédé de prédiction d'une consommation énergétique d'un consommateur correspondant à une localisation connue, ladite prédiction concernant une plage horaire prédéterminée et une période de temps prédéterminée, caractérisé en ce qu'il comporte les étapes suivantes :

- relevé à distance de la consommation énergétique dudit consommateur,
- collecte d'informations météorologiques correspondant à la localisation dudit consommateur,
- prévision pour ledit consommateur à partir d'un calendrier et des données précitées correspondant audit consommateur, pour chaque jour à venir de la période prédéterminée et pour ladite plage horaire, d'une consommation énergétique à l'aide d'au moins un modèle mathématique, choisi parmi les modèles mathématiques de régression paramétrique et les modèles mathématiques de régression semi-paramétrique, le modèle mathématique utilisé pour chaque jour étant choisi en fonction d'une différence de temps entre la date à laquelle la prévision est réalisée et le jour concerné par la prévision,
- sommation pour la plage horaire et le consommateur des consommations déjà réalisées et mesurées de la période prédéterminée considérée et des prévisions correspondantes faites à l'étape précédente, et
- transmission à une interface homme/machine dudit consommateur pour ladite plage horaire d'un résultat correspondant à la sommation réalisée à l'étape précédente pour la période prédéterminée considérée.

Dans ce procédé, la plage horaire peut être subdivisée en horodates, et la prévision faite pour la plage horaire peut alors être une somme de prévisions faites pour chaque horodate de la plage horaire.

La prévision de consommation pour le premier jour de prévision dans un tel procédé est réalisée par exemple à partir d'un modèle de type régression sur bases de splines, les autres modèles étant adaptés automatiquement à partir de ce premier modèle.

Ce procédé peut être mis en oeuvre pour chaque plage horaire de la période de temps concernée et n'est pas réservé aux plages horaires dans lesquelles des pics de consommation sont généralement constatés.

Des détails et avantages de la présente invention apparaitront mieux dans la description qui suit, faite en référence au dessin schématique annexé sur lequel :

La figure 1 est une vue schématique d'un système permettant de faire une prédiction de consommation énergétique,
La figure 2 est un tableau récapitulatif de modèles utilisés pour réaliser ladite prédiction de consommation au début d'une période,
La figure 3 est un tableau récapitulatif de modèles utilisés pour réaliser ladite prédiction de consommation les deux premiers jours d'une période,

La figure 4 est un tableau récapitulatif de modèles utilisés pour réaliser ladite prédiction de consommation les trois premiers jours d'une période,

La figure 5 est un tableau récapitulatif de modèles utilisés pour réaliser ladite prédiction de consommation les quatre premiers jours d'une période,

La figure 6 est un tableau récapitulatif de modèles utilisés pour réaliser ladite prédiction de consommation les quatre derniers jours d'une période,

La figure 7 illustre l'évolution de l'erreur relative de la prédiction réalisée sur un mois de trente jours, et

La figure 8 est un organigramme récapitulant le procédé qui va être décrit ci-après.

Un procédé de prédiction d'une consommation énergétique ainsi qu'un système associé sont décrits ci-après en référence aux figures annexées.

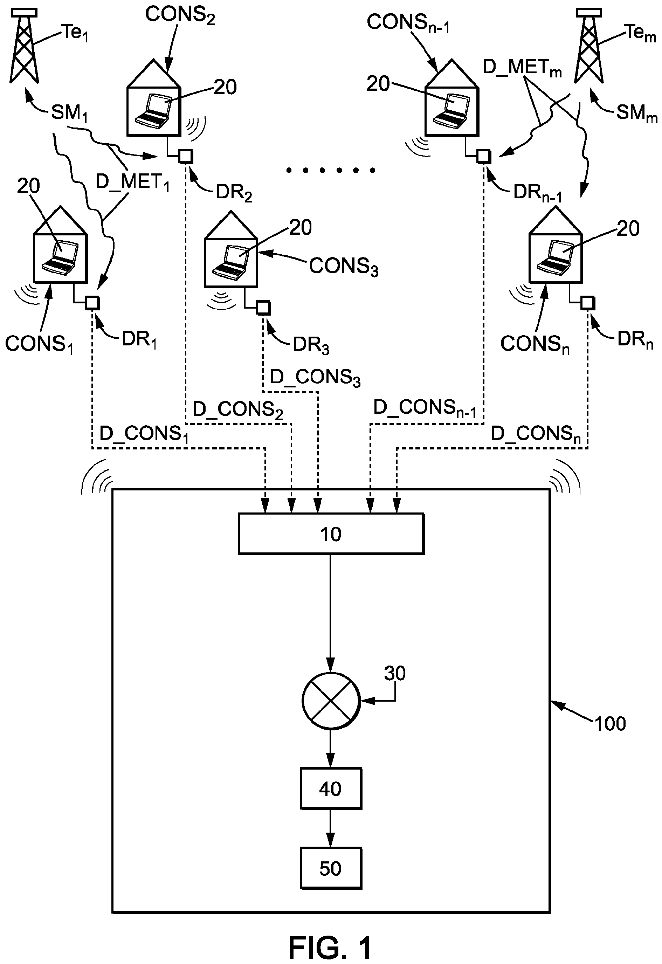

La figure 1 illustre schématiquement un système de prédiction d'une consommation énergétique et montre des consommateurs $CONS_i$ ainsi qu'un système informatique 100. Chaque consommateur $CONS_i$ est desservi par un réseau de distribution d'énergie (non représenté). On supposera par la suite que l'énergie distribuée ici est de l'énergie électrique mais il peut s'agir d'un autre « fluide », par exemple du gaz naturel.

Le système informatique 100 illustré comporte une mémoire 10 qui est configurée pour mémoriser des données $D\_CONS_i$, $i \in [1,n]$ collectées auprès des consommateurss $CONS_i$ à l'aide de dispositifs de relève $DR_i$, $i \in [1,n]$ associés à chaque compteur électrique installé auprès de chaque consommateur $CONS_i$, $i \in [1,n]$.

Dans l'exemple décrit ici, ces données $D\_CONS_i$, $i \in [1,n]$ comportent notamment des informations relatives à une consommation réelle en électricité d'une pluralité de consommateurs $CONS_i$, $i \in [1,n]$.

De préférence, chacune de ces données comporte également une information temporelle relative à l'instant auquel la consommation en électricité par le consommateur a été réalisée. On parle d'horodatage.

La collecte de données est réalisée avec un pas de collecte, qui peut-être, à titre d'exemple illustratif nullement limitatif, de 30 minutes, ce qui correspond à un pas demi-horaire. Bien évidemment, l'homme du métier comprendra ici qu'il est possible de prévoir une collecte des données avec un autre pas de collecte, plus grand ou plus petit. Le pas de 30 minutes permet d'obtenir des résultats de bonne qualité et correspond au pas couramment utilisé dans un réseau de distribution électrique.

Il est également prévu que les données collectées comportent aussi des données météorologiques $D\_MET_i$ qui sont également enregistrées dans la mémoire 10 ou dans une base de données séparée. Ces données contiennent des informations relatives aux conditions météorologiques ainsi que des prévisions météorologiques pour chaque con-sommateur $CONS_i$.

Selon une variante de réalisation (celle illustrée sur la figure 1), ces données météorologiques sont récupérées à partir de stations météo $SM_1$ à $SM_j$ directement par les dispositifs de relève $DR_1$ à $DR_n$.

Dans l'exemple décrit ici et illustré en figure 1, les dispositifs de relève $DR_1$, $DR_2$ et $DR_3$ associés respectivement aux consommateurs $CONS_1$, $CONS_2$, et $CONS_3$ récupèrent de la station météo $SM_1$ des données météorologiques $D\_MET_1$ contenant une information telle que par exemple la température extérieure $Te_1$ et des prévisions locales de températures. De la même façon, dans l'exemple décrit ici, les dispositifs de relève $DR_{n-1}$ et $DR_n$ associés respectivement aux consommateurs $CONS_{n-1}$ et $CONS_n$ récupèrent de la station météo $SM_m$ la donnée météorologique $D\_MET_m$ contenant une information telle que par exemple la température extérieure $Te_m$ et des prévisions locales de températures.

Il s'agit bien évidemment d'un exemple parmi d'autres exemples.

Alternativement, ces données, provenant de stations météo $SM_1$ à $SM_m$ associées à chaque consommateur ou chaque « région » de consommation, peuvent être récupérées directement par le système informatique et mis dans la mémoire 10. Dans ce cas, les stations météo sont géolocalisées tout comme les consommateurs. Ainsi, pour faire l'association entre un consommateur et les données météorologiques correspondantes, on recherche la station météo disponible la plus proche d'un lieu de consommation.

Au sein du système informatique 100, un processeur traite les données de la mémoire 10 à l'aide d'un calendrier 30 et fournit à un serveur 40 des résultats de calcul de prédiction de consommation pour chacun des consommateurs $CONS_i$. Ces résultats sont mis en forme et analysés au sein du serveur 40 et des moyens de transmission 50 envoient à chaque consommateur $CONS_i$ des prédictions sur sa consommation d'électricité avec éventuellement au moins une recommandation pour que le consommateur puisse adapter sa consommation. Chaque consommateur $CONS_i$ dispose à cet effet d'une interface homme-machine (IHM) 20 qui reçoit les données transmises par les moyens de transmission 50.

Il est proposé ici un procédé, qui à partir des données de la mémoire 10 et à partir du calendrier 30, calcule une consommation totale estimée pour chaque consommateur $CONS_i$ pour une période prédéterminée. On supposera par la suite que cette période est une période d'un mois. Ce mois sera considéré comme un mois de trente jours. Le procédé qui va être présenté est un procédé complet qui s'adapte aux données des consommateurs. Au fur et à mesure du mois (de la période), la consommation totale du mois est mise à jour avec les nouvelles données collectées.

Dans la suite de la description, on notera : $\widehat{CONSO}$ une consommation (totale ou intermédiaire) obtenue par le procédé, et CONSO une consommation réalisée (et donc mesurée et/ou fournie par un dispositif de relevé DRi).

Des « plages horaires » d'un consommateur sont définies comme différentes durées, au cours du mois dont le procédé prévoit la consommation totale. Ainsi, à chaque pas de temps (chaque horodate, par exemple chaque pas de 30 minutes) du mois, est associée une « plage horaire ». On définit N comme le nombre total de plages horaires du consommateur pour un mois donné, N étant un nombre entier strictement positif. N peut être égal à 1. Par exemple, les « plages horaires » peuvent prendre trois modalités : « Pointe », « Heures Pleines » et « Heures Creuses ».

Dans la suite de la présente description, les plages horaires p seront numérotées, de 1 à N avec N=3 par exemple.

Le procédé de prédiction prend en entrée la série temporelle de consommation d'électricité du consommateur considéré sur les mois passés et différentes informations sur le consommateur et sur la météo locale correspondant à ce consommateur.

Selon une forme de réalisation préférée retenue ici de manière non limitative dans le présent exemple d'application, le procédé utilise un modèle GAM de prévision de la consommation pour le consommateur en question. Les modèles de la famille GAM (Generalized Additive Model soit en français Modèle Additif Généralisé) sont des modèles de régression semi paramétriques, avec des fonctions de lissage correspondant aux fonctions spline.

Il s'agit donc d'un modèle de ce type :

$$\widehat{CONSO}_i = a + bx_{1,i} + cx_{2,i} + \cdots + b'f_1(x'_{1,i}) + c'f_2(x'_{2,i}) + \cdots + \varepsilon_i$$

avec $i$ = l'horodate $\widehat{CONSO}_i$ = la consommation J+1 d'électricité prévue par le modèle, pour chaque horodate.

$x_{1,i}, x_{2,i}, \boldsymbol{x'_{1,i}}$, ...= les variables explicatives utilisées dans la modélisation. Les variables explicatives possibles sont listées ci-dessous.

$f_1, f_2,$ ... = des fonctions de lissage. Les fonctions de lissage possibles peuvent être, par exemple, des fonctions splines de régression, des fonctions p-splines,

$a, b,$ c, $b',$ ... = les paramètres du modèle. Ces paramètres sont les mêmes pour tous les horodates.

Par la suite, on nommera ce modèle en entrée « le modèle 1 » : MODELE1. Ce modèle n'est pas calibré, c'est-à-dire que ses paramètres n'ont pas encore été calculés. Il s'agira de calibrer ces paramètres pour chaque consommateur. Dans le procédé, ces paramètres sont estimés par le modèle.

La série temporelle de consommation d'électricité du consommateur considéré sur les mois passés est constituée en référence à un calendrier construit de telle sorte que :

- l'horodate de début est le premier horodate de la série temporelle,
- l'horodate de fin est le dernier horodate de la série temporelle jusqu'à la fin de la période à prévoir,
- le pas de temps est le pas de temps le plus fin présent dans la série temporelle, et
- le format est le même que le format du calendrier de la série temporelle (fuseau horaire, ...).

Les variables explicatives en entrée évoquées plus haut peuvent être (liste non exhaustive) :

- la géolocalisation de chaque consommateur.

On dispose ici de l'adresse géographique de chaque consommateur dont on veut prédire la consommation. Cette adresse est utile notamment pour lier ce consommateur à une station météo (la plus proche) et donc obtenir des données météorologiques associées à ce consommateur.

- les températures locales.

Ces variables peuvent être fournies par un prestataire, gestionnaire des stations météo. Il s'agit des températures prévisionnelles pour une plage de temps à venir, par exemple comprise entre J+1 et J+n. Parmi ces températures prévisionnelles, on distingue deux variables explicatives distinctes, d'une part, les températures au-dessus d'un seuil prédéterminé, dit seuil de climatisation et, d'autre part, les températures en-dessous d'un seuil prédéterminé, dit seuil de chauffage.

Les températures enregistrées par les stations météo locales sont également enregistrées comme variable explicative d'entrée.

L'ensemble de ces variables de températures sont lissées avec un coefficient de lissage exponentiel.

- les variables de « calendrier »

Il convient dans le calendrier de distinguer les différents jours de la semaine et les jours fériés. Une variable booléenne peut par exemple être associée à chaque jour pour indiquer si ce jour est un jour férié ou non. On peut aussi prévoir une variable (de 0 à 6) pour déterminer le jour de la semaine comme variable explicative. Il convient aussi de situer le jour considéré dans l'année. Une variable peut donner le mois de l'année et/ou une autre variable le numéro du jour de l'année.

Enfin, une autre variable associée aux horodates indique si l'heure considérée est l'heure d'été ou d'hiver (du dernier dimanche d'octobre au dernier dimanche de mars).

- les variables de consommation retardée.

Il s'agit ici de la variable CONSO déjà évoquée. Parmi les consommations déjà relevées, on prendra par exemple comme variables explicatives d'entrée :

les consommations sur les sept jours précédents
la consommation il y a quatorze jours et
la consommation il y a vingt-et-un jours.

L'ensemble de ces variables explicatives peuvent être utilisées pour prévoir la consommation électrique d'un consommateur le jour suivant, soit J+1, comme expliqué ci-après.

On considère maintenant que l'on veut calculer la consommation d'un consommateur donné pour le mois à venir. La prédiction est faite le premier jour de ce mois à 0h00. On suppose en outre qu'il s'agit d'un mois de trente jours (le principe qui va être décrit s'applique de la même manière pour les mois de vingt-huit, vingt-neuf et trente-et-un jours).

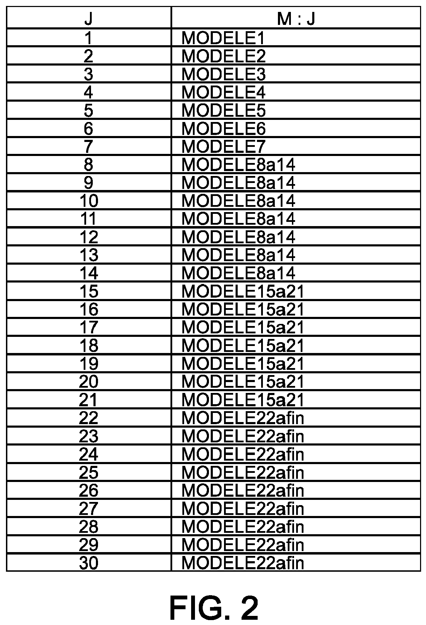

On prévoit la consommation à tous les pas de temps de chacun des trente jours du mois en utilisant dix modèles différents. Le choix de dix pour le nombre de modèles vient du fait qu'il est proposé sept modèles différents (un pour chacun des sept premiers jours à prévoir) auxquels s'ajoutent trois modèles différents (un pour chacune des trois semaines suivantes à prévoir). Les différents modèles utilisés sont récapitulés sur la figure 2.

Le modèle de départ est le modèle pour prédire la consommation au jour J+1 : c'est une entrée du procédé de prédiction. C'est le MODELE1.

Pour chacun des trente jours du mois et à partir de ce MODELE1 initial, le procédé génère automatiquement les dix modèles qui seront utilisés (MODELE1, MODELE2, MODELE3, MODELE4, MODELE5, MODELE6, MODELE7, MODELE8a14, MODELE15a21, MODELE22afin), afin de prévoir la consommation pour le mois complet.

Comme indiqué, MODELE1 est une donnée d'entrée du procédé. Les neuf autres modèles sont des modèles dérivés de ce premier modèle de la manière suivante :

MODELE2
est réalisé à partir de MODELE1. La variable explicative CONSO J-1 devient alors la variable CONSO J-2 tandis que les autres variables explicatives du modèle MODELE1 sont conservées telles quelles.
MODELE3
est réalisé à partir de MODELE1. La variable explicative CONSO J-1 devient alors la variable CONSO J-3 tandis que les autres variables explicatives du modèle MODELE1 sont conservées telles quelles.
MODELE4
est réalisé à partir de MODELE1. La variable explicative CONSO J-1 devient alors la variable CONSO J-4. Les variables de températures prévisionnelles locales deviennent des variables de température locale normales. Les autres variables explicatives du modèle MODELE1 sont conservées telles quelles.
MODELE5
est réalisé à partir de MODELE4. La variable explicative CONSO J-4 devient alors la variable CONSO J-5 tandis que les autres variables explicatives du modèle MODELE4 sont conservées telles quelles.
MODELE6
est réalisé à partir de MODELE4. La variable explicative CONSO J-4 devient alors la variable CONSO J-6 tandis que les autres variables explicatives du modèle MODELE4 sont conservées telles quelles.
MODELE7
est réalisé à partir de MODELE4. La variable explicative CONSO J-4 devient alors la variable CONSO J-7 tandis que les autres variables explicatives du modèle MODELE4 sont conservées telles quelles.
MODELE8a14
est réalisé à partir de MODELE7. La variable explicative CONSO J-7 devient alors la variable CONSO J-14 tandis que les autres variables explicatives du modèle MODELE7 sont conservées telles quelles.

MODELE15a21

est réalisé à partir de MODELE8a14. La variable explicative CONSO J-14 devient alors la variable CONSO J-21 tandis que les autres variables explicatives du modèle MODELE8a14 sont conservées telles quelles.

MODELE22afin

est réalisé à partir de MODELE15a21. La variable explicative CONSO J-21 est supprimée du modèle tandis que les autres variables explicatives du modèle MODELE15a21 sont conservées telles quelles.

Comme indiqué ci-dessus, le MODELE1 est donc le modèle de référence du procédé. Puis, à partir du 4ème jour, le MODELE4 devient le modèle de référence. Puis, à partir du 8ème jour, le MODELE8a14 devient le modèle de référence. Ensuite, à partir du 15ème jour, le MODELE15a21 devient le modèle de référence. Enfin, à partir du 22ème jour, le MODELE22afin devient le modèle de référence.

Les dix modèles illustrés sur la figure 2 constituent le premier jalon du procédé. Le procédé calibre chacun de ces dix modèles avec toutes les variables explicatives sur les données disponibles.

En utilisant ainsi les dix modèles, on peut réaliser pour chaque horodate (plage de consommation, par exemple d'une demi-heure) de chaque jour du mois une prévision de consommation.

Il est alors proposé de faire un bilan pour le mois, plage horaire par plage horaire (c'est-à-dire par exemple pour les heures de pointe, pour les heures pleines et pour les heures creuses).

On a alors les prévisions de consommations suivantes pour le mois, pour chaque plage horaire :

$$\widehat{CONSO}_{PLAGE_p} = \sum_{i \in PLAGE_p} \widehat{CONSO}_i$$

avec p allant de 1 à N

avec :

$i$ = l' horodate

$p$ = le numéro de la plage horaire, allant de 1 à N

$\widehat{CONSO}_i$ = la consommation prévue par le modèle pour chaque horodate $i$

$PLAGE_p$ = la p$^{ième}$ plage horaire du consommateur. Chaque horodate appartient à une seule plage horaire.

À ce stade, le procédé produit donc N (par exemple 3) prédictions de consommations totales mensuelles, faites le 1$^{er}$ jour du mois à minuit.

On se place alors à 0h00 le 2ème jour du mois et le procédé va prévoir la consommation totale par horodate pour l'ensemble des jours restant du mois : du 2ème jour du mois inclus au 30ème jour du mois inclus. Le 1er jour du mois a déjà été réalisé, il n'y a donc pas de prévision correspondante.

Le procédé actualise les données avec les données disponibles avec les données du 1er jour du mois qui vient de s'écouler. Le procédé calibre chacun des dix nouveaux modèles avec ces nouvelles données, en prenant donc en compte les données réalisées du 1er jour du mois.

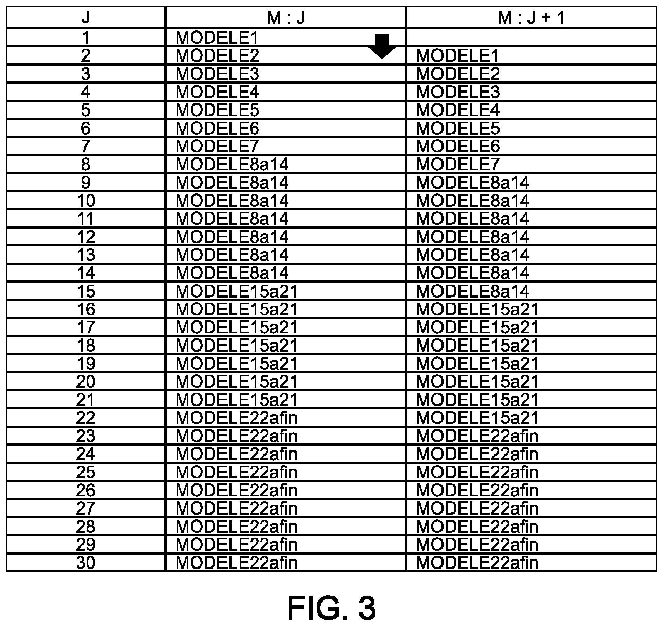

Le tableau de la figure 3 illustre les modèles utilisés au début du deuxième jour pour faire les prédictions de consommation pour la suite du mois. On décale d'un jour les modèles utilisés le premier jour du mois. Ainsi, la prédiction pour le deuxième jour sera faite avec le modèle MODELE1 et ainsi de suite. On retrouve donc ici les dix modèles utilisés précédemment.

À ce stade, à chaque horodate du mois correspond :

- soit une consommation réalisée pour les horodates du premier jour du mois
- soit une consommation prévue pour les horodates du 2ème au 30ème jour du mois inclus.

Pour chacune de toutes les N plages horaires, on calcule la consommation prévue par le modèle pour le mois complet. Pour chacune de toutes les N plages horaires, le calcul se décompose entre les consommations réalisées du début du mois et les consommations prévues par le modèle pour le reste du mois. Pour chaque plage horaire p, on a :

$$C\widehat{ONSO}_{PLAGE_p} = \sum_{\substack{i \in PLAGE_p \\ i \in jour\, 1}} CONSO_i + \sum_{\substack{k \in PLAGE_p \\ k \in [jour\, 2\, ; jour\, 30]}} \widehat{CONSO}_k$$

avec

p allant de 1 à N
i = les horodates du jour 1
p = le numéro de la plage horaire, allant de 1 à N
k = les horodates des jours 2 à 30 du mois
$CONSO_i$ = la consommation réalisée pour chaque horodate $i$

$\widehat{CONSO}_k$ = la consommation prévue par le modèle pour chaque horodate $k$

$PLAGE_p$ = la $p^{ième}$ plage horaire du consommateur. Chaque plage horaire est associée à un horodate.

Le procédé produit donc N consommations totales mensuelles, pour le 2ème jour du mois à 0h00.

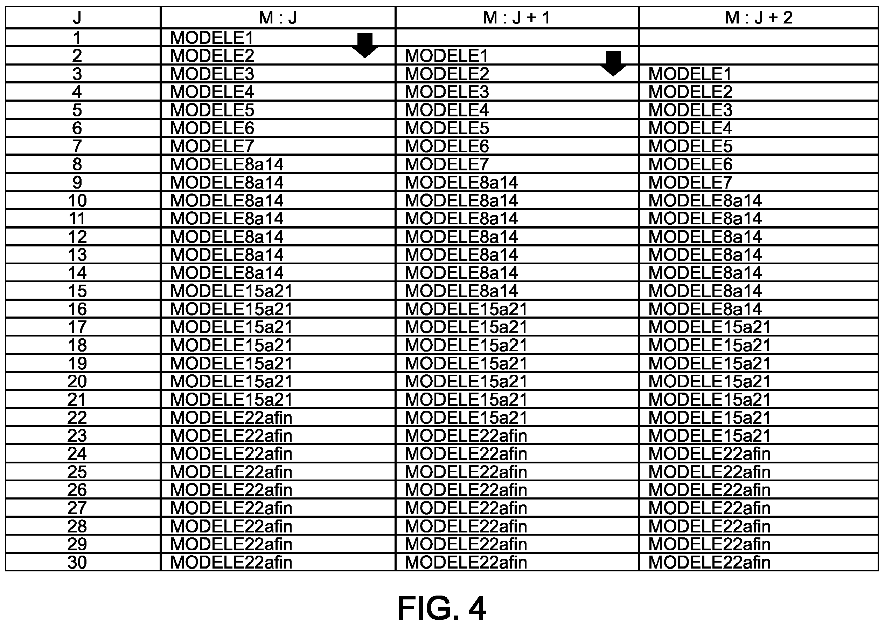

Pour le troisième jour, le principe est le même que pour le deuxième jour. Le tableau de la figure 4 illustre les modèles utilisés pour prédire les consommations de chaque jour à venir. Ici, on réalise à nouveau un décalage d'un jour. Les dix modèles sont utilisés.

Pour chacune de toutes les N plages horaires, on calcule la consommation prévue par le modèle pour le mois complet. Pour chacune de toutes les N plages horaires, le calcul se décompose entre les consommations réalisées du début du mois et les consommations prévues par le modèle pour le reste du mois, selon le même principe que pour le jour 2 du mois. Pour chaque plage horaire, on a :

$$C\widehat{ONSO}_{PLAGE_p} = \sum_{\substack{i \in PLAGE_p \\ i \in [jour\, 1\, ; jour\, 2]}} CONSO_i + \sum_{\substack{k \in PLAGE_p \\ k \in [jour\, 3\, ; jour\, 30]}} \widehat{CONSO}_k$$

avec

p allant de 1 à N
i = les horodates du 1er jour et du 2ème jour du mois
p = le numéro de la plage horaire, allant de 1 à N
k = les horodates des jours 3 à 30 du mois
$CONSO_i$ = la consommation réalisée pour chaque horodate i

$\widehat{CONSO}_k$ = la consommation prévue par le modèle pour chaque horodate k (c'est-à-dire les jours 3 à 30 du mois)

$PLAGE_p$ = la $p^{ième}$ plage horaire du consommateur. Chaque plage horaire est associée à un horodate.

Le procédé produit N consommations totales mensuelles, pour le 3ème jour du mois à 0h00.

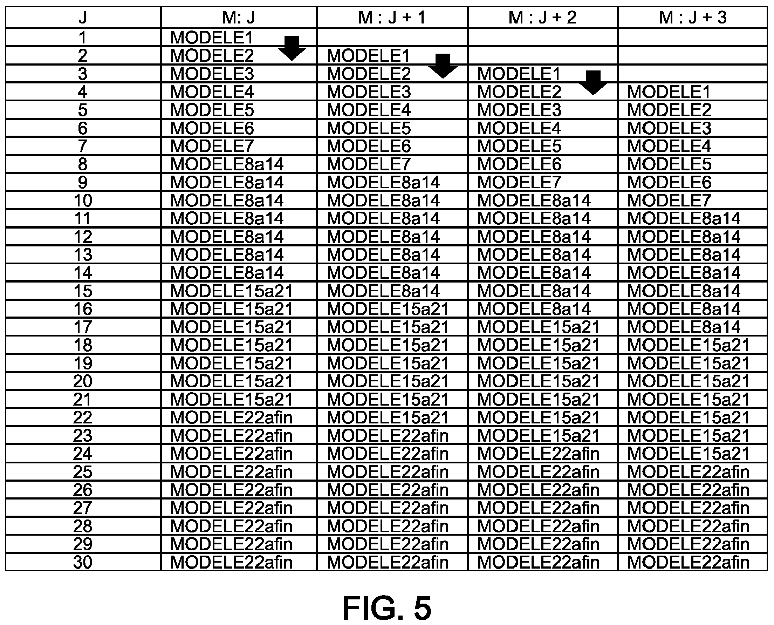

Le principe est identique pour le quatrième jour comme l'illustre la figure 5. On retrouve une formule similaire qu'il semble inutile de répéter ici.

À partir du 10ème jour, seuls neuf modèles seront encore utilisés. Les formules restent cependant inchangées.

De même, à partir du 17ème jour seuls huit modèles seront encore utilisés.

À partir du 24ème jour, seuls sept modèles seront encore utilisés.

À partir des jours suivants, un modèle de moins est utilisé chaque jour.

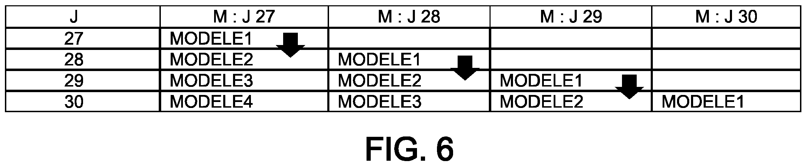

La figure 6 illustre les modèles utilisés à la fin du mois.

À titre illustratif, on indique le calcul effectué le trentième jour.

Pour chacune de toutes les N plages horaires, on calcule la consommation prévue par le modèle pour le mois complet. Pour chacune de toutes les N plages horaires, le calcul se décompose entre les consommations réalisées du début du mois et les consommations prévues par le modèle pour le reste du mois, selon le même principe que précédemment. Pour chaque plage horaire, on a :

$$\widehat{CONSO}_{PLAGE_p} = \sum_{\substack{i \in PLAGE_p \\ i \in [jour\,1\,;\,jour\,29]}} CONSO_i + \sum_{\substack{k \in PLAGE_p \\ k \in [jour\,30]}} \widehat{CONSO}_k$$

avec :

p allant de 1 à N

i = les horodates du $1^{er}$ jour au du 29ème jour du mois

p = le numéro de la plage horaire, allant de 1 à N

k = les horodates du 30ème jour du mois

$CONSO_i$ = la consommation réalisée pour chaque horodate i

$\widehat{CONSO}_k$ = la consommation prévue par le modèle pour chaque horodate k (c'est-à-dire le 30ème jour du mois)

$PLAGE_p$ = la $p^{ième}$ plage horaire du consommateur. Chaque plage horaire est associée à un horodate.

Le procédé produit N consommations totales mensuelles, pour le 30ème jour du mois à minuit.

En sortie du procédé, on obtient donc pour chaque plage horaire (par exemple heures de pointe, heures pleines, heures creuses) pour chacun des jours du mois (ou de la période considérée) une prévision de consommation électrique (ou d'un autre fluide). Tout au long du mois, le consommateur dispose alors de sa prévision de consommation pour le mois en cours. La prédiction est réalisée par le serveur 40 et les moyens de transmission 50 le transmettent à une interface IHM 20 comme illustré sur la figure 1.

Les prévisions de consommation envoyées à chaque consommateur sont de préférence accompagnées d'une recommandation. Le consommateur peut ainsi, d'une part, suivre au jour le jour sa consommation et prévoir le budget correspondant et, d'autre part, adapter cette consommation pour limiter son budget.

Ces prévisions peuvent être réalisées pour tous les consommateurs. Grâce à ces prévisions et éventuellement aux recommandations jointes, il est possible d'adapter la consommation de tous les consommateurs et non pas uniquement les gros consommateurs qui acceptent de limiter leur consommation en contrepartie de tarifs négociés (effacement).

Le procédé a été testé sur un historique de deux mois. Comme dans l'ensemble de la présente description, on se ramène au cas le plus simple où tous les mois de l'historique de données ont trente jours.

Pour chacun des mois disponibles dans l'historique des données et pour chacun des trente jours de chacun de ces mois, le procédé donne en sortie la prévision de consommation définie plus haut :

$\widehat{CONSO}_{PLAGE_p}$ = consommation totale du mois prévue par le modèle pour le plage horaire p

L'objectif de la validation des performances est de mesurer l'écart entre ces deux grandeurs :

$\widehat{CONSO}_{PLAGE_p}$ = consommation totale du mois prévue par le modèle pour la plage horaire p et

$CONSO_{PLAGE_p}$ = consommation réalisée du mois pour la plage horaire p

Pour cela, des indicateurs d'évaluation du procédé ont été construits. Pour chacun des jours du mois dont le procédé prévoit la consommation (du $1^{er}$ jour à 00h00 au 30ème jour du mois à 24h00) deux indicateurs d'erreur de prévision ont été calculés.

Dans la suite, on notera :

$CONSO_{mois\,M,\,PLAGE_p}$ : la consommation totale réalisée pour le mois complet M, pour la plage horaire p

L'indicateur d'erreur relative suivant est calculé, par plage horaire et par mois calendaire de l'historique. On appelle cet indicateur « erreur relative » pour le $j^{ième}$ jour du mois M et la plage horaire p :

$$erreur\ relative_{jour\,j,\ mois\,M,\ PLAGE_p}$$

$$= \frac{\left| \widehat{CONSO}_{jour\,j,\ mois\,M,\ PLAGE_p} - CONSO_{mois\,M,\ PLAGE_p} \right|}{CONSO_{mois\,M,\ PLAGE_p}}$$

avec :

j = le jour du mois allant de 1 à 30

p = le numéro de la plage horaire

$CONSO_{mois\ M,\ PLAGE_p}$ = la consommation totale réalisée pour le mois complet M, pour la plage horaire p

$\widehat{CONSO}_{jour\ j,\ mois\ M,\ PLAGE_j}$ = la consommation prévue par le modèle au jour j à 00h00, pour le mois complet M et pour la plage horaire p

$PLAGE_p$ = la p$^{ième}$ plage horaire du consommateur. Chaque horodate est associé à une plage horaire

M = le mois pour lequel on calcule l'erreur relative au jour j

L'erreur relative par mois et par plage horaire est restituée pour l'ensemble des 30 jours du mois.

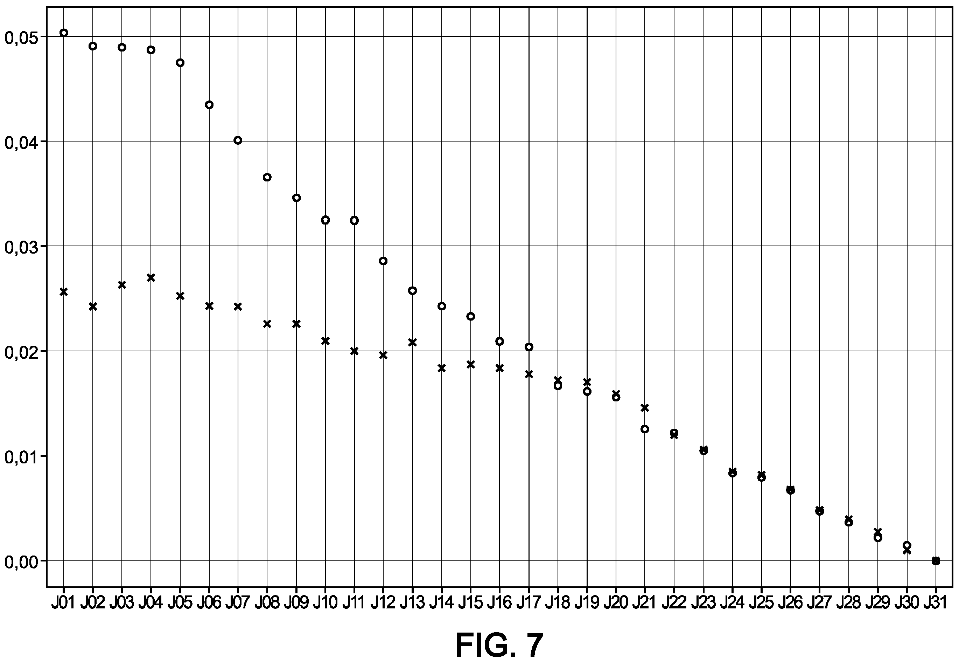

Il est possible de représenter graphiquement cet indicateur d'erreur relative par plage horaire et par mois, pour un mois donné et pour chacun des jours du mois (dans le cas simple où le mois a 30 jours). Par exemple, s'il y a deux plages horaires différentes pour chacun des 30 jours de ce mois, on obtient le graphique de la figure 7. Cette dernière illustre l'évolution de l'erreur relative par plage horaire sur un mois.

Il est également possible de calculer l'erreur relative sur un intervalle de temps plus long, par exemple une saison.

Pour un mois donné M, on calcule chaque jour du mois prévu M (jours allant de 1 à 30) un indicateur d'erreur relative moyenne par saison S et par plage horaire p. On considère deux saisons : l'hiver allant de novembre à mars et l'été allant d'avril à octobre.

L'erreur relative moyenne par plage horaire et par saison est donc la moyenne des erreurs mensuelles, pour chaque mois appartenant à la saison S. On la calcule ainsi :

$$erreur\ relative\ moyenne_{jour\ j,\ saison\ S,\ PLAGE_p}$$
$$= \frac{1}{nombre\ mois_{saison\ S,\ PLAGE_p}} \sum_{\substack{M \in saison\ S \\ M\ tel\ que\ PLAGE_p \in M}} \left( erreur\ relative_{jour\ j,\ mois\ M,\ PLAGE_p} \right)$$

avec :

j = le jour du mois allant de 1 à 30

p = le numéro de la plage horaire

$PLAGE_p$ = la p$^{ième}$ plage horaire du consommateur. Chaque horodate est associé à une plage horaire.

M = le mois pour lequel on calcule l'erreur relative au jour j

S = la saison

erreur relative$_{jour\ j,\ mois\ M,\ PLAGE_p}$ = l'erreur relative définie ci-dessus.

L'erreur relative moyenne par saison et par plage horaire est restituée pour l'ensemble des 30 jours du mois.

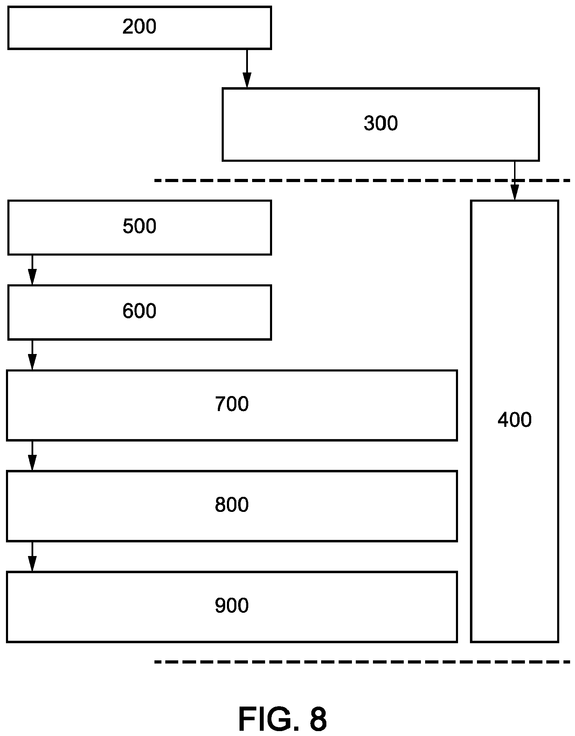

La figure 8 résume la description qui précède.

À l'étape 200, il s'agit de gérer les tensions qui existent sur un réseau de distribution de fluide, par exemple un réseau électrique au niveau d'un pays.

Il est proposé à l'étape 300 de mettre à disposition de tous les consommateurs rattachés au réseau géré, des outils de maitrise de leur consommation, notamment lorsque la consommation globale sur le réseau est importante, c'est-à-dire en période de pointes.

Le fournisseur d'électricité (ou autre fluide) a alors pour objectif 400 de donner à tous ses consommateurs, petits ou gros, c'est-à-dire particuliers, industriels ou du domaine tertiaire, ou bien à certains d'entre eux, des prévisions de leur consommation pour le mois en cours, par plage horaire, ainsi qu'éventuellement des recommandations d'éco-gestes pour inciter à limiter la consommation, notamment en période de pointe.

Les étapes 500 à 900 sont mises en oeuvre pour atteindre l'objectif 400.

Tout d'abord, les données relatives aux consommateurs concernés sont collectées au cours d'une étape 500. Il s'agit ici de mémoriser des données de consommation, horodate par horodate, pour tous les consommateurs concernés mais aussi des données liées à la météo (données normales et prévisions). Un calendrier est aussi établi au cours de cette étape 500.

Un modèle de base (MODELE1) est alors établi à l'étape 600. Il est adapté à chaque consommateur pour fournir une prévision individuelle de chaque consommateur concerné.

Ensuite, à l'étape 700, au moment de réaliser la prédiction de consommation, le modèle établi est adapté automatiquement pour prévoir la consommation du jour, du jour suivant, etc. jusqu'à la fin de la période (du mois) considéré.

À partir de ces prédictions, à l'étape 800, on construit des indicateurs qui donnent les prévisions de consommation globale et notamment pour les périodes de pointe, pour la période (le mois) complète.

Enfin, les résultats sont mis à disposition des consommateurs (étape 900).

Les consommateurs concernés peuvent alors consulter jour après jour la prévision de leur consommation (électrique). L'IHM utilisé et portant la référence 20 sur la figure 1 peut être de tout type. Il peut s'agir d'un terminal dédié, par exemple un écran au niveau du compteur ou déporté, d'un téléphone mobile muni d'une application permettant de communiquer avec le fournisseur d'électricité (ou autre), d'un ordinateur relié à internet pour la consultation sur un site internet sécurisé des données prévisionnelles de consommation.

Des gestions particulières peuvent être envisagées. Si un seuil de consommation est atteint, une alerte particulière peut par exemple être prévue.

De même, si un pic de consommation est prévu, un message peut aussi être envoyé demandant de limiter la consommation afin de modérer le pic de consommation.

De toute façon, la présente invention ne se limite pas à la forme de réalisation décrite ci-dessus à titre d'exemple non limitatif et aux variantes évoquées. Elle concerne également toutes les variantes de réalisation à la portée de l'homme du métier dans le cadre des revendications ci-après.

## Revendications

1. Système de prévision de consommation énergétique au sein d'un réseau de distribution d'énergie sur une période prédéterminée, comportant des moyens informatiques conçus pour être couplés avec :

   - au moins un dispositif de relevé (DRi) à distance de la consommation énergétique d'au moins un consommateur (CONSi) du réseau de distribution d'énergie, la localisation de chaque consommateur étant connue,
   - un serveur météorologique (SMj) pour fournir des températures prévisionnelles sur la période prédéterminée en fonction de la localisation d'un consommateur du réseau de distribution d'énergie,

   les moyens informatiques comprenant :

   - un calendrier (30) avec indication des jours et des jours fériés et une détermination de plages horaires pour chaque journée,
   - une mémoire (10) pour enregistrer des données associées aux consommateurs du réseau de distribution d'énergie, et
   - au moins une interface homme/machine (20) d'un consommateur, **caractérisé en ce que** les moyens informatiques comportent en outre un processeur pour mettre en oeuvre chacune des étapes suivantes :
   - prévision pour un consommateur à partir du calendrier (30) et des données précitées correspondant audit consommateur, pour chaque jour à venir de la période prédéterminée et pour chacune des plages horaires, d'une consommation énergétique à l'aide d'au moins un modèle mathématique, choisi parmi les modèles mathématiques de régression paramétrique et les modèles mathématiques de régression semi-paramétrique, le modèle mathématique utilisé pour chaque jour étant choisi en fonction d'une différence de temps entre la date à laquelle la prévision est réalisée et le jour concerné par la prévision,
   - sommation pour chaque plage horaire et chaque consommateur des consommations déjà réalisées et mesurées de la période prédéterminée considérée et des prévisions correspondantes faites à l'étape précédente, et
   - transmission à l'interface homme/machine (20) dudit consommateur pour chaque plage horaire d'un résultat correspondant à la sommation réalisé à l'étape précédente pour la période prédéterminée considérée.

2. Système de prévision selon la revendication 1, **caractérisé en ce que** chaque modèle utilisé pour la prévision de consommation est un modèle de régression semi paramétrique avec des fonctions de lissage correspondant aux fonctions spline.

3. Système de prévision selon l'une des revendications 1 ou 2, **caractérisé en ce que** la période prédéterminée est un mois calendaire.

4. Système de prévision selon l'une des revendications 1 à 3, **caractérisé en ce que** dix modèles distincts sont utilisés :

   - un premier pour effectuer la prévision du lendemain de la date à laquelle la prévision est réalisée,
   - un deuxième pour effectuer la prévision du deuxième jour après la date à laquelle la prévision est réalisée,

- un troisième pour effectuer la prévision du troisième jour après la date à laquelle la prévision est réalisée,
- un quatrième pour effectuer la prévision du quatrième jour après la date à laquelle la prévision est réalisée,
- un cinquième pour effectuer la prévision du cinquième jour après la date à laquelle la prévision est réalisée,
- un sixième pour effectuer la prévision du sixième jour après la date à laquelle la prévision est réalisée,
- un septième pour effectuer la prévision du septième jour après la date à laquelle la prévision est réalisée,
- un huitième pour effectuer les prévisions du huitième au quatorzième jour après la date à laquelle la prévision est réalisée,
- un neuvième pour effectuer les prévisions du quinzième au vingt-et-unième jour après la date à laquelle la prévision est réalisée, et
- un dixième pour effectuer les prévisions du vingt-deuxième jour après la date à laquelle la prévision est réalisée au dernier jour de la période prédéterminée considérée.

5. Système de prévision selon la revendication 4, **caractérisé en ce que** le premier modèle pour effectuer la prévision du premier jour est une entrée explicative du procédé de prédiction utilisé, et **en ce que** les autres modèles sont adaptés automatiquement de ce premier modèle.

6. Système de prévision selon l'une des revendications 1 à 5, **caractérisé en ce que** la transmission à l'interface homme/machine (20) des résultats est accompagnée de la transmission éventuelle d'une recommandation de consommation pour le(s) jour(s) à venir.

7. Procédé de prédiction d'une consommation énergétique d'un consommateur correspondant à une localisation connue, ladite prédiction concernant une plage horaire prédéterminée et une période de temps prédéterminée, **caractérisé en ce qu'**il comporte les étapes suivantes :

    - relevé à distance de la consommation énergétique dudit consommateur,
    - collecte d'informations météorologiques correspondant à la localisation dudit consommateur,
    - prévision pour ledit consommateur à partir d'un calendrier et des données précitées correspondant audit consommateur, pour chaque jour à venir de la période prédéterminée et pour ladite plage horaire, d'une consommation énergétique à l'aide d'au moins un modèle mathématique, choisi parmi les modèles mathématiques de régression paramétrique et les modèles mathématiques de régression semi-paramétrique, le modèle mathématique utilisé pour chaque jour étant choisi en fonction d'une différence de temps entre la date à laquelle la prévision est réalisée et le jour concerné par la prévision,
    - sommation pour la plage horaire et le consommateur des consommations déjà réalisées et mesurées de la période prédéterminée considérée et des prévisions correspondantes faites à l'étape précédente, et
    - transmission à une interface homme/machine (20) dudit consommateur pour ladite plage horaire d'un résultat correspondant à la sommation réalisée à l'étape précédente pour la période prédéterminée considérée.

8. Procédé selon la revendication 7, **caractérisé en ce que** la plage horaire est subdivisée en horodates, et **en ce que** la prévision faite pour la plage horaire est une somme de prévisions faites pour chaque horodate de la plage horaire.

9. Procédé selon l'une des revendications 7 ou 8, **caractérisé en ce que** la prévision de consommation pour le premier jour de prévision est réalisée à partir d'un modèle de type régression sur bases des splines, les autres modèles étant adaptés automatiquement à partir de ce premier modèle.

10. Procédé selon l'une des revendications 7 à 9, **caractérisé en ce qu'**il est mis en oeuvre pour chaque plage horaire de la période de temps concernée.

FIG. 1

| J | M : J |
|---|---|
| 1 | MODELE1 |
| 2 | MODELE2 |
| 3 | MODELE3 |
| 4 | MODELE4 |
| 5 | MODELE5 |
| 6 | MODELE6 |
| 7 | MODELE7 |
| 8 | MODELE8a14 |
| 9 | MODELE8a14 |
| 10 | MODELE8a14 |
| 11 | MODELE8a14 |
| 12 | MODELE8a14 |
| 13 | MODELE8a14 |
| 14 | MODELE8a14 |
| 15 | MODELE15a21 |
| 16 | MODELE15a21 |
| 17 | MODELE15a21 |
| 18 | MODELE15a21 |
| 19 | MODELE15a21 |
| 20 | MODELE15a21 |
| 21 | MODELE15a21 |
| 22 | MODELE22afin |
| 23 | MODELE22afin |
| 24 | MODELE22afin |
| 25 | MODELE22afin |
| 26 | MODELE22afin |
| 27 | MODELE22afin |
| 28 | MODELE22afin |
| 29 | MODELE22afin |
| 30 | MODELE22afin |

# FIG. 2

| J | M : J | M : J + 1 |
|---|---|---|
| 1 | MODELE1 | |
| 2 | MODELE2 | MODELE1 |
| 3 | MODELE3 | MODELE2 |
| 4 | MODELE4 | MODELE3 |
| 5 | MODELE5 | MODELE4 |
| 6 | MODELE6 | MODELE5 |
| 7 | MODELE7 | MODELE6 |
| 8 | MODELE8a14 | MODELE7 |
| 9 | MODELE8a14 | MODELE8a14 |
| 10 | MODELE8a14 | MODELE8a14 |
| 11 | MODELE8a14 | MODELE8a14 |
| 12 | MODELE8a14 | MODELE8a14 |
| 13 | MODELE8a14 | MODELE8a14 |
| 14 | MODELE8a14 | MODELE8a14 |
| 15 | MODELE15a21 | MODELE8a14 |
| 16 | MODELE15a21 | MODELE15a21 |
| 17 | MODELE15a21 | MODELE15a21 |
| 18 | MODELE15a21 | MODELE15a21 |
| 19 | MODELE15a21 | MODELE15a21 |
| 20 | MODELE15a21 | MODELE15a21 |
| 21 | MODELE15a21 | MODELE15a21 |
| 22 | MODELE22afin | MODELE15a21 |
| 23 | MODELE22afin | MODELE22afin |
| 24 | MODELE22afin | MODELE22afin |
| 25 | MODELE22afin | MODELE22afin |
| 26 | MODELE22afin | MODELE22afin |
| 27 | MODELE22afin | MODELE22afin |
| 28 | MODELE22afin | MODELE22afin |
| 29 | MODELE22afin | MODELE22afin |
| 30 | MODELE22afin | MODELE22afin |

# FIG. 3

| J | M : J | M : J + 1 | M : J + 2 |
|---|---|---|---|
| 1 | MODELE1 | | |
| 2 | MODELE2 | MODELE1 | |
| 3 | MODELE3 | MODELE2 | MODELE1 |
| 4 | MODELE4 | MODELE3 | MODELE2 |
| 5 | MODELE5 | MODELE4 | MODELE3 |
| 6 | MODELE6 | MODELE5 | MODELE4 |
| 7 | MODELE7 | MODELE6 | MODELE5 |
| 8 | MODELE8a14 | MODELE7 | MODELE6 |
| 9 | MODELE8a14 | MODELE8a14 | MODELE7 |
| 10 | MODELE8a14 | MODELE8a14 | MODELE8a14 |
| 11 | MODELE8a14 | MODELE8a14 | MODELE8a14 |
| 12 | MODELE8a14 | MODELE8a14 | MODELE8a14 |
| 13 | MODELE8a14 | MODELE8a14 | MODELE8a14 |
| 14 | MODELE8a14 | MODELE8a14 | MODELE8a14 |
| 15 | MODELE15a21 | MODELE8a14 | MODELE8a14 |
| 16 | MODELE15a21 | MODELE15a21 | MODELE8a14 |
| 17 | MODELE15a21 | MODELE15a21 | MODELE15a21 |
| 18 | MODELE15a21 | MODELE15a21 | MODELE15a21 |
| 19 | MODELE15a21 | MODELE15a21 | MODELE15a21 |
| 20 | MODELE15a21 | MODELE15a21 | MODELE15a21 |
| 21 | MODELE15a21 | MODELE15a21 | MODELE15a21 |
| 22 | MODELE22afin | MODELE15a21 | MODELE15a21 |
| 23 | MODELE22afin | MODELE22afin | MODELE15a21 |
| 24 | MODELE22afin | MODELE22afin | MODELE22afin |
| 25 | MODELE22afin | MODELE22afin | MODELE22afin |
| 26 | MODELE22afin | MODELE22afin | MODELE22afin |
| 27 | MODELE22afin | MODELE22afin | MODELE22afin |
| 28 | MODELE22afin | MODELE22afin | MODELE22afin |
| 29 | MODELE22afin | MODELE22afin | MODELE22afin |
| 30 | MODELE22afin | MODELE22afin | MODELE22afin |

FIG. 4

EP 3 499 436 A1

| J | M : J | M : J + 1 | M : J + 2 | M : J + 3 |
|---|---|---|---|---|
| 1 | MODELE1 | | | |
| 2 | MODELE2 | MODELE1 | | |
| 3 | MODELE3 | MODELE2 | MODELE1 | |
| 4 | MODELE4 | MODELE3 | MODELE2 | MODELE1 |
| 5 | MODELE5 | MODELE4 | MODELE3 | MODELE2 |
| 6 | MODELE6 | MODELE5 | MODELE4 | MODELE3 |
| 7 | MODELE7 | MODELE6 | MODELE5 | MODELE4 |
| 8 | MODELE8a14 | MODELE7 | MODELE6 | MODELE5 |
| 9 | MODELE8a14 | MODELE8a14 | MODELE7 | MODELE6 |
| 10 | MODELE8a14 | MODELE8a14 | MODELE8a14 | MODELE7 |
| 11 | MODELE8a14 | MODELE8a14 | MODELE8a14 | MODELE8a14 |
| 12 | MODELE8a14 | MODELE8a14 | MODELE8a14 | MODELE8a14 |
| 13 | MODELE8a14 | MODELE8a14 | MODELE8a14 | MODELE8a14 |
| 14 | MODELE8a14 | MODELE8a14 | MODELE8a14 | MODELE8a14 |
| 15 | MODELE15a21 | MODELE8a14 | MODELE8a14 | MODELE8a14 |
| 16 | MODELE15a21 | MODELE15a21 | MODELE8a14 | MODELE8a14 |
| 17 | MODELE15a21 | MODELE15a21 | MODELE15a21 | MODELE8a14 |
| 18 | MODELE15a21 | MODELE15a21 | MODELE15a21 | MODELE15a21 |
| 19 | MODELE15a21 | MODELE15a21 | MODELE15a21 | MODELE15a21 |
| 20 | MODELE15a21 | MODELE15a21 | MODELE15a21 | MODELE15a21 |
| 21 | MODELE15a21 | MODELE15a21 | MODELE15a21 | MODELE15a21 |
| 22 | MODELE22afin | MODELE15a21 | MODELE15a21 | MODELE15a21 |
| 23 | MODELE22afin | MODELE22afin | MODELE15a21 | MODELE15a21 |
| 24 | MODELE22afin | MODELE22afin | MODELE22afin | MODELE15a21 |
| 25 | MODELE22afin | MODELE22afin | MODELE22afin | MODELE22afin |
| 26 | MODELE22afin | MODELE22afin | MODELE22afin | MODELE22afin |
| 27 | MODELE22afin | MODELE22afin | MODELE22afin | MODELE22afin |
| 28 | MODELE22afin | MODELE22afin | MODELE22afin | MODELE22afin |
| 29 | MODELE22afin | MODELE22afin | MODELE22afin | MODELE22afin |
| 30 | MODELE22afin | MODELE22afin | MODELE22afin | MODELE22afin |

## FIG. 5

EP 3 499 436 A1

| J | M : J 27 | M : J 28 | M : J 29 | M : J 30 |
|---|---|---|---|---|
| 27 | MODELE1 | | | |
| 28 | MODELE2 | MODELE1 | | |
| 29 | MODELE3 | MODELE2 | MODELE1 | |
| 30 | MODELE4 | MODELE3 | MODELE2 | MODELE1 |

# FIG. 6

EP 3 499 436 A1

FIG. 7

```
┌─────────────────────────┐
│           200           │
└─────────────────────────┘
              │
              ▼
       ┌──────────────────────────────────┐
       │               300                │
       └──────────────────────────────────┘
                                    │
- - - - - - - - - - - - - - - - - - │ - - - - -
                                    ▼
┌─────────────────────────┐    ┌────────┐
│           500           │    │        │
└─────────────────────────┘    │        │
        │                      │        │
        ▼                      │        │
┌─────────────────────────┐    │        │
│           600           │    │        │
└─────────────────────────┘    │        │
        │                      │        │
        ▼                      │  400   │
┌──────────────────────────────┐│        │
│             700              ││        │
└──────────────────────────────┘│        │
        │                      │        │
        ▼                      │        │
┌──────────────────────────────┐│        │
│             800              ││        │
└──────────────────────────────┘│        │
        │                      │        │
        ▼                      │        │
┌──────────────────────────────┐│        │
│             900              ││        │
└──────────────────────────────┘└────────┘
- - - - - - - - - - - - - - - - - - - - - - -
```

# FIG. 8

Europäisches Patentamt
European Patent Office
Office européen des brevets

**RAPPORT DE RECHERCHE EUROPEENNE**

Numéro de la demande

EP 18 20 8904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2017/183029 A1 (GRID4C [IL]) 26 octobre 2017 (2017-10-26) * abrégé * * page 1, ligne 1 - ligne 24 * * page 8, ligne 4 - ligne 8 * * page 8, ligne 16 - page 10, ligne 6 * * page 13, ligne 27 - page 14, ligne 2 * * page 14, ligne 15 - ligne 31 * * page 15, ligne 17 - ligne 32 * ----- | 1-10 | INV. G06Q10/04 G06Q50/06 |
| A | GAILLARD PIERRE ET AL: "Additive models and robust aggregation for GEFCom2014 probabilistic electric load and electricity price forecasting", INTERNATIONAL JOURNAL OF FORECASTING, NORTH-HOLLAND, AMSTERDAM, NL, vol. 32, no. 3, 15 février 2016 (2016-02-15), pages 1038-1050, XP029565385, ISSN: 0169-2070, DOI: 10.1016/J.IJFORECAST.2015.12.001 * abrégé * * chapitres 1, 2 et 3 * ----- | 1-10 | DOMAINES TECHNIQUES RECHERCHES (IPC) G06Q |
| A | GOUDE YANNIG ET AL: "Local Short and Middle Term Electricity Load Forecasting With Semi-Parametric Additive Models", IEEE TRANSACTIONS ON SMART GRID, IEEE, USA, vol. 5, no. 1, 1 janvier 2014 (2014-01-01) , pages 440-446, XP011536179, ISSN: 1949-3053, DOI: 10.1109/TSG.2013.2278425 [extrait le 2013-12-24] * abrégé * * chapitres I, II et III * ----- | 1-10 | |

Le présent rapport a été établi pour toutes les revendications

| Lieu de la recherche | Date d'achèvement de la recherche | Examinateur |
|---|---|---|
| Munich | 7 janvier 2019 | Chauvet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 20 8904

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-01-2019

| Document brevet cité au rapport de recherche | Date de publication | Membre(s) de la famille de brevet(s) | Date de publication |
|---|---|---|---|
| WO 2017183029 A1 | 26-10-2017 | AU 2017252091 A1<br>WO 2017183029 A1 | 22-11-2018<br>26-10-2017 |

Pour tout renseignement concernant cette annexe : voir Journal Officiel de l'Office européen des brevets, No.12/82